# EUROPÄISCHE PATENTANMELDUNG

(11) **EP 0 886 100 A1**
(43) Veröffentlichungstag der Anmeldung: **23.12.1998**
(21) Anmeldenummer: 98108003.9
(22) Anmeldetag: 30.04.1998
(51) Int. Cl.: F16L 55/28, F16L 55/40, B08B 9/00

(54) **Höhenverstellbares Fahrgestell für ein Kanalbearbeitungsgerät**

(30) Priorität: 18.06.1997 DE 29710642 U
(71) Anmelder: Kanaltechnik Kunz GmbH & Co., 81379 München (DE)
(72) Erfinder: Dettmann, Eberhard, 72127 Kusterdingen-Wankheim (DE); Hecker, Hans-Peter, 82065 Baierbrunn (DE)
(74) Vertreter: Gossel, Hans K., Dipl.-Ing.

(57) **Zusammenfassung**

Zur Höhenverstellung eines Kanalbearbeitungsgeräts (2) ist dieses auf einem Tragrahmen (1) eines in einem Kanal auf Laufrädern verfahrbaren Fahrgestells befestigt. Ein Laufrad (5) des Fahrgestells wird von dem Kanalbearbeitungsgerät angetrieben. Um eine einfache Höhenverstellung zu schaffen und um Bewegungen beispielsweise von Spachtelarmen des Kanalbearbeitungsgeräts in unmittelbarer Umgebung des Fahrgestells zu ermöglichen, ist mindestens ein Laufrad (5) über eine an dem Rahmen angelenkte Schwinge (3) abgestützt. Die Schwinge (3) ist gegenüber dem Tragrahmen (1) verschwenkbar und in einer neuen Verschwenkposition arretierbar.

## Beschreibung

Die Erfindung betrifft ein höhenverstellbares, in einem Kanal auf Laufrädern verfahrbares Fahrgestell mit einem Tragrahmen zur Befestigung eines Kanalbearbeitungsgeräts und mit mindestens einem, seitens des Kanalbearbeitungsgerätes angetriebenen Laufrad.

Kanalbearbeitungsgeräte können beispielsweise Kanalsanierungsroboter sein, die zur Kanalsanierung in nicht begehbaren Kanälen eingesetzt werden. Derartige Kanalsanierungsroboter zum Ausführen von Fräs- oder Spachtelarbeiten sind beispielsweise aus EP 0 211 825 B1 bekannt. Kanalbearbeitungsgeräte sind sehr teure Geräte, deren Anschaffung einen beträchtlichen Investitionsaufwand bedeutet. Es ist daher für Kanalsanierungsunternehmen nicht wirtschaftlich, zur Sanierung von Kanälen mit verschiedenen Querschnitten und Ausdehnungen unterschiedliche Kanalsanierungsroboter anzuschaffen. Um den Investitionsaufwand gering halten zu können, ist es bereits grundsätzlich bekannt, für einen bestimmten Typ eines Kanalbearbeitungsgeräts ein Fahrgestell bereitzustellen, das für verschiedene Kanalquerschnitte anpaßbar ist.

Aus der DE 94 19 853 U1 ist ein höhenverstellbares Fahrgestell bekannt, dessen Laufräder gegenüber dem Fahrgestell mit mindestens zwei Scherenhubgetrieben abgestützt sind, wobei die Scherenhubgetriebe in ihren Spreizstellungen durch eine Gewindespindel verstellbar sind. Der Antrieb der Laufräder erfolgt über einen Kettentrieb, der über die Gelenkachsen des Scherenhubgetriebes geführt ist. Auf diese Weise läßt sich das Fahrgestell stufenlos in seiner Höhe verstellen.

Aus der Patentanmeldung DE 196 26 105 ist ein weiteres höhenverstellbares Fahrgestell für ein Kanalbearbeitungsgerät bekannt, wobei die Höhenverstellbarkeit hier durch teleskopartig längsverschiebliche Profilstücke erreicht wird, die durch Hydrozylinder oder mit Antrieben versehene Spindelantrieben aus- und einfahrbar sind.

Die bekannten Lösungen zur Höhenverstellung eines Fahrgestells für ein Kanalbearbeitungsgerät sind allerdings konstruktiv aufwendig und damit wartungsanfällig sowie verhältnismäßig teuer. Außerdem besteht das Bedürfnis, daß das Kanalbearbeitungsgerät auch Schalungsmanschetten in dem Kanal selbständig auslegen kann, wofür Spachtelarme in unmittelbarer Umgebung des Fahrgestells ohne Bewegungseinschränkung bewegt werden müssen. Bei den herkömmlichen Lösungen ist dies allerdings nicht möglich, da die Tragkonstruktionen für das Fahrgestell die Bewegung der Spachtelarme behindern.

Aufgabe der Erfindung ist es daher, ein Fahrgestell für ein Kanalbearbeitungsgerät zu schaffen, das in einfacher Weise höhenverstellbar ist und das die Bewegung von Spachtelarmen in unmittelbarer Umgebung des Fahrgestells ermöglicht.

Diese Aufgabe wird durch den kennzeichnenden Teil des Anspruchs 1 gelöst. Die erfindungsgemäße Lösung besteht darin, daß mindestens ein Laufrad über eine an dem Rahmen angelenkte Schwinge abgestützt ist, wobei die Schwinge gegenüber dem Tragrahmen verschwenkbar und in der neuen Verschwenkposition arretierbar ist. Durch die Verschwenkung einer Schwinge ist es somit auf einfache Weise möglich, die vertikale Position des Fahrgestells zu verändern. Je nach Bedarf gibt es dabei vielfältige Verstell- und Verschwenkmöglichkeiten: So kann das Fahrgestell beispielsweise nur an einer Seite abgesenkt werden, indem die auf dieser Seite befindlichen Schwingen mit den daran befindlichen Laufrädern ausgeschwenkt werden. Die horizontale Position des Fahrgestells kann jedoch bei einer Höhenverstellung auch beibehalten werden, indem die gegenüberliegenden Schwingen gegensinnig oder synchron verschwenkt werden. Voraussetzung für eine Höhenverstellung ist lediglich, daß die Laufräder in den verschiedenen Verschwenkpositionen der Schwingen weiterhin frei auf dem Kanalgrund abrollen können und daß sich der Schwerpunkt des Fahrgestells samt Kanalbearbeitungsgerät nicht außerhalb der Laufräder verlagert.

Nach einer bevorzugten Ausführungsform ist vorgesehen, daß das Verschwenken einer Schwinge durch einen selbstarretierbaren Spindelantrieb erfolgt, wobei der Spindelantrieb seitens des Kanalbearbeitungsgeräts antreibbar ist. Durch einen selbstarretierbaren Spindelantrieb ist sichergestellt, daß die Schwinge nur bei Betätigung des Spindelantriebs verschwenkt wird und ansonsten automatisch arretiert ist. Selbstverständlich kann die Betätigung des Spindelantriebs dabei auch manuell erfolgen.

Insbesondere bei extremen Verschwenkpositionen der Schwingen ist es vorteilhaft, ein Gegengewicht auf dem Tragrahmen derart zu befestigen, daß sich der Schwerpunkt des beladenen Fahrgestells stets innerhalb der Laufräder befindet.

Nach einer weiteren bevorzugten Ausführungsform ist vorgesehen, daß das mindestens eine über eine verschwenkbare Schwinge abgestützte Laufrad ein über ein Zugmittel angetriebenes Laufrad ist, wobei der Antrieb über zwei Zwischenritzel erfolgt, die auf einer gemeinsamen Welle aufgesetzt sind, die in der Verschwenkachse der Schwinge gelagert ist. Als Zugmittelantrieb kommt insbesondere ein Kettenantrieb in Betracht, wobei aufgrund der beiden Zwischenritzel zwei Ketten vorzusehen sind. Die erste Kette verbindet das Antriebsritzel mit dem einen Zwischenritzel, während die zweite Kette das andere Zwischenritzel mit dem Ritzel eines Laufrades verbindet. Auf diese Weise ist es möglich, das auch ein angetriebenes Rad durch eine Schwinge verschwenkbar ist, ohne daß hierzu eine aufwendige Getriebelösung notwendig wäre.

Nach einer weiteren bevorzugten Ausführungsform ist vorgesehen, daß für Kanäle mit Eiprofil zwei hintereinander in Fahrtrichtung ausgerichtete und angetriebene Laufräder vorgesehen sind, die jeweils über eine angelenkte Schwinge abgestützt sind, wobei die Schwingen mittels einer Koppelstange synchron verschwenkbar sind. Hierdurch sind Verschwenkpositionen erreichbar, in denen das eine Ende des Tragrahmens die Laufräder überragt, so daß bei Verlegung von Schalungsmanschetten ein freies Arbeiten der Spachtelarme auch unmittelbar unterhalb des Tragrahmens möglich ist.

Nach einer weiteren bevorzugten Ausführungsform sind als Seitenführung an jeder Seite des Fahrgestells Führungsschienen vorgesehen, die über einen zweiten Spindelantrieb in horizontaler Richtung verstellbar sind. Auf diese Weise ist das Fahrgestell nicht nur in vertikaler Richtung, sondern auch in horizontaler Richtung an den jeweiligen Querschnitt des Kanals anpaßbar. Die Führungsschienen können zusätzlich mit frei drehbaren Laufrollen ausgestattet sein.

Weitere Einzelheiten und Vorteile der Erfindung werden anhand eines in der Zeichnung dargestellten Ausführungsbeispiels erläutert. In dieser zeigt:
- Fig. 1: eine Seitenansicht des erfindungsgemäßen Fahrgestells,
- Fig. 2: eine Draufsicht des erfindungsgemäßen Fahrgestells und
- Fig. 3: einen Querschnitt durch eine Schwinge des erfindungsgemäßen Fahrgestells, wobei zwei verschiedene Profile eines eiförmigen Kanals angedeutet sind.

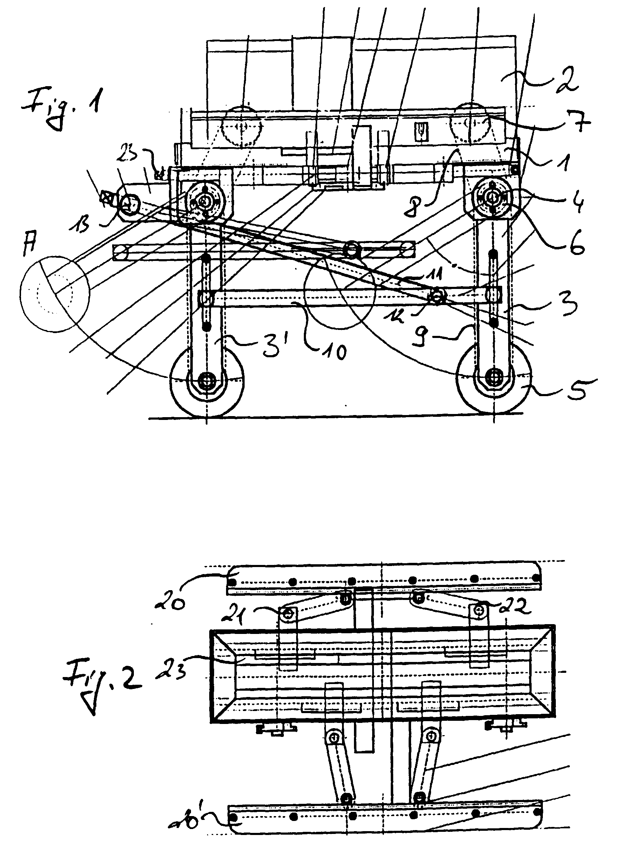

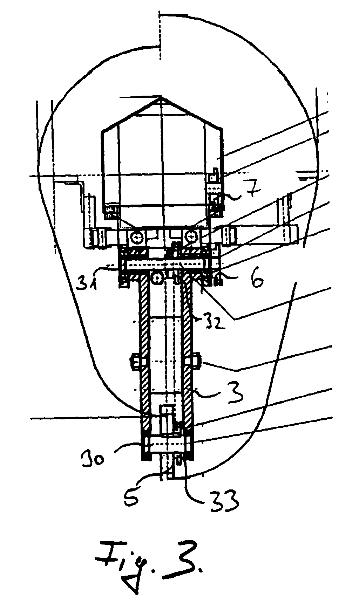

Figur 1 zeigt eine Seitenansicht des erfindungsgemäßen Fahrgestells. Das Fahrgestell umfaßt einen Rahmen 1, auf dem ein entsprechendes Kanalbearbeitungsgerät 2 aufgebaut ist. An dem Rahmen 1 sind zwei gleichartig ausgestaltete Schwingen 3 und 3' angelenkt. Die Beschreibung beschränkt sich im folgenden der Einfachheit halber nur auf die Schwinge 3. Rahmenseitig ist die Schwinge an der Achse 4 gelagert und weist an ihrem anderen Ende ein freigelagertes Laufrad 5 auf. Das Laufrad 5 wird dabei über einen Kettenantrieb angetrieben. Als Antriebsritzel dient das Ritzel 7, das über die Kette 8 mit dem Zwischenritzel 6 verbunden ist. Zum Antrieb des Laufrades 5 dient eine zweite Kette 9, wobei die genaue Konstruktion aus dem Schnitt gemäß Figur 3 zu entnehmen ist. Demnach ist das Laufrad 5 am Ende der Schwinge 3 auf der Achse 30 gelagert. Mit dem Laufrad 5 verbunden ist das Ritzel 33, das über die Kette 9 von dem Zwischenritzel 32 angetrieben wird. Das Zwischenritzel 32 ist wiederum über die Welle 31 mit dem Zwischenritzel 6 starr verbunden, das von dem Antriebsritzel 7 angetrieben wird. Um die Achse der Welle 31 ist die Schwinge 3 verschwenkbar. Hierzu ist gemäß Figur 1 eine Spindel 11 vorgesehen, die an ihrem einen Ende in dem Spindellager 12 gelagert ist, das an einer die beiden Schwingen 3 und 3' verbindenden Koppelstange 10 angelenkt ist. Das andere Ende der Spindel läuft in einer Spindelmutter 13, wobei die Spindel manuell oder auch seitens des Kanalbearbeitungsgeräts 2 antreibbar ist. Durch Betätigung der Spindel kann das Fahrgestell somit beispielsweise in die angedeutete Position A verschwenkt und entsprechend abgesenkt werden.

Figur 2 zeigt eine Draufsicht des erfindungsgemäßen Fahrgestells. Das Fahrgestell wird seitlich abgestützt durch die Führungsschienen 20 und 20'. Der Einfachheit halber wird die Beschreibung auf die Führungsschiene 20 beschränkt. An die Führungsschiene 20 sind zwei Gestänge 21 und 22 angelenkt, die wiederum von einer weiteren Spindel 23 antreibbar sind. Auf der Spindel 23 sind dabei zwei gegenläufige Gewinde aufgebracht, so daß die Gestänge 21 und 22 bei Betätigung der Spindel 23 gegensinnig verstellbar sind. Bei der Führungsschiene 20 ist eine minimale Verstellposition, bei der Führungsschiene 20' dagegen eine maximale Verstellposition angedeutet.

Zum Sanieren eines Kanalrohrs wird das entsprechende Kanalbearbeitungsgerät 2 auf den Tragrahmen 1 aufgesetzt und die Antriebsritzel 7 werden mit dem entsprechenden Zwischenritzel 6 verbunden. Die Führungsschienen 20, 20' werden gemäß der Breite des Kanalrohrs eingestellt. Die Schwingen werden weiterhin so verschwenkt, daß durch das Kanalbearbeitungsgerät der obere Teil des Kanalprofils bearbeitet werden kann. Nachdem das Kanalbearbeitungsgerät das Ende des jeweiligen Kanals erreicht hat, wird das Fahrgestell durch Verschwenken der Schwingen 3, 3' abgesenkt, so daß die untere Querschnittsfläche des jeweiligen Kanals bearbeitet werden kann. Hierbei ist auf einer Seite des Fahrgestells genügend Freiraum vorhanden, um auch mit Spachtelarmen in unmittelbarer Umgebung des Fahrgestells arbeiten zu können.

## Patentansprüche

1. Höhenverstellbares, in einem Kanal auf Laufrädern verfahrbares Fahrgestell
mit einem Tragrahmen zur Befestigung eines Kanalbearbeitungsgeräts
und mit mindestens einem, seitens des Kanalbearbeitungsgeräts angetriebenen Laufrad,
**dadurch gekennzeichnet,**
daß mindestens ein Laufrad über eine an dem Rahmen angelenkte Schwinge abgestützt ist, wobei die Schwinge gegenüber dem Tragrahmen verschwenkbar und in der neuen Verschwenkposition arretierbar ist.

2. Fahrgestell nach Anspruch 1, dadurch gekennzeichnet, daß die mindestens eine Schwinge durch einen selbstarretierbaren Spindelantrieb verschwenkbar ist.

3. Fahrgestell nach Anspruch 1 oder 2, dadurch gekennzeichnet, daß ein Gegengewicht derart auf dem Tragrahmen befestigt ist, daß sich der Schwerpunkt des beladenen Fahrgestells in den gewünschten Verschwenkpositionen der Schwingen noch innerhalb der Laufräder befindet.

4. Fahrgestell nach einem der Ansprüche 1 bis 3, dadurch gekennzeichnet, daß das mindestens eine über eine verschwenkbare Schwinge abgestützte Laufrad ein über ein Zugmittel angetriebenes Laufrad ist, wobei der Antrieb über ein Zwischenritzel erfolgt, das in der Verschwenkachse der Schwinge gelagert ist.

5. Fahrgestell nach einem der Ansprüche 1 bis 4, dadurch gekennzeichnet, daß für Kanäle mit Eiprofil zwei hintereinander in Fahrtrichtung ausgerichtete und angetriebene Laufräder vorgesehen sind, die jeweils über eine an dem Tragrahmen angelenkte Schwinge abgestützt sind, wobei die Schwingen mittels einer Koppelstange synchron verschwenkbar sind.

6. Fahrgestell nach Anspruch 5, dadurch gekennzeichnet, daß als Seitenführung Führungsschienen vorgesehen sind, die über einen zweiten Spindelantrieb in horizontaler Richtung verstellbar sind.
